# EUROPÄISCHE PATENTSCHRIFT

(11) **EP 4 288 988 B1**
(45) Veröffentlichungstag und Bekanntmachung des Hinweises auf die Patenterteilung: **11.03.2026**
(21) Anmeldenummer: 22710507.9
(22) Anmeldetag: 16.02.2022
(51) Int. Cl.: H01H 23/04, H02G 3/12, H02G 3/14

(54) **BLENDRAHMEN FÜR EIN ELEKTRISCHES INSTALLATIONSGERÄT**
FRONT PLATE FOR AN ELECTRICAL INSTALLATION DEVICE
PLAQUE AVANT POUR UN DISPOSITIF D'INSTALLATION ÉLECTRIQUE

(30) Priorität: 01.03.2021 DE 102021104869
(43) Veröffentlichungstag der Anmeldung: 13.12.2023
(73) Patentinhaber: SCHNEIDER ELECTRIC INDUSTRIES SAS, 92500 Rueil-Malmaison (FR)
(72) Erfinder: ÖNDER, Mehmet, 51643 Gummersbach (DE); PISE, Mallikarjuna Rao, Bangalore 560 096 (IN)
(74) Vertreter: Manitz Finsterwald Patent- und Rechtsanwaltspartnerschaft mbB
(86) Internationale Anmeldenummer: PCT/EP2022/053823
(87) Internationale Veröffentlichungsnummer: WO 2022/184442

(56) Entgegenhaltungen:
- EP-A1- 3 432 432
- WO-A1-2013/182819
- DE-U1- 20 103 739

## Beschreibung

Die vorliegende Erfindung betrifft einen Blendrahmen für ein elektrisches Installationsgerät, wobei der Blendrahmen zumindest eine quadratische Öffnung mit vier Seitenwänden aufweist, die zur Aufnahme einer Schaltwippe oder eines Einsatzes, beispielsweise eines Steckdoseneinsatzes dient. Die EP 3 432 432 A1 offenbart einen Blendrahmen nach dem Oberbegriff des Anspruchs 1. Die WO 2013/182819 A1 und DE 201 03 739 U1 offenbaren Blendrahmen mit einer quadratischen Öffnung. Bekannte Blendrahmen werden an einem Schalter oder an einer Steckdose mit Hilfe eines Klemmelements oder durch einen mit der Steckdose verschraubten Steckdoseneinsatz gehalten. Hierbei besteht einerseits das Problem, dass nicht zuletzt aufgrund von Fertigungstoleranzen das Spaltmaß zwischen einem Steckdoseneinsatz und dem Blendrahmen nicht immer gleichmä-βig ist, d.h. es entstehen zwischen dem Steckdoseneinsatz und dem Blendrahmen unterschiedlich große Spalte, die manuell justiert werden müssen. Bei der Montage von Schaltwippen kann das Problem entstehen, dass diese bei einer Betätigung unerwünscht verschoben werden.

Es ist die Aufgabe der vorliegenden Erfindung, einen Blendrahmen für ein elektrisches Installationsgerät zu schaffen, mit dem ein gleichmäßiges Spaltmaß sowohl für einen Einsatz wie auch für eine Schaltwippe erreicht werden kann.

Die Lösung dieser Aufgabe erfolgt durch die Merkmale des Anspruchs 1 und insbesondere dadurch, dass in der Öffnung und nur in der Mitte jeder Seitenwand ein Zentriervorsprung vorgesehen ist. Erfindungsgemäß wird hierdurch erreicht, dass einerseits ein Einsatz an vier mittigen Punkten innerhalb der Öffnung zentriert werden kann, so dass der Spalt zwischen Einsatz und Blendrahmen an allen vier Seitenwänden gleich groß ist. Andererseits lässt sich mit dem Blendrahmen eine Schaltwippe in der Mitte einer Seitenwand an dem Zentriervorsprung lagern, so dass diese bei einer Betätigung mittig abgestützt ist und sich nicht verschiebt.

Vorteilhafte Ausführungsformen der Erfindung sind in der Beschreibung, der Zeichnung sowie den Unteransprüchen beschrieben.

In einer ersten vorteilhaften Ausführungsform kann der Zentriervorsprung zumindest zwei unterschiedlich orientierte Schrägflächen aufweisen. Hierdurch lässt sich durch ein und denselben Zentriervorsprung einerseits eine Zentrierung eines Einsatzes und andererseits eine Abstützung einer Schaltwippe erzielen.

Nach einer weiteren vorteilhaften Ausführungsform kann der Zentriervorsprung eine Schrägfläche aufweisen, die eine Bewegung der Schaltwippe in Richtung derjenigen Seitenwand bewirkt, an der sich der Zentriervorsprung befindet. Nachdem der Blendrahmen insgesamt mit zwei Paaren von gegenüberliegenden Zentriervorsprüngen versehen ist, wird hierdurch ein Einsatz bei Aufsetzen auf den Blendrahmen gleichmäßig und selbsttätig zentriert.

Nach einer weiteren vorteilhaften Ausführungsform kann der Zentriervorsprung trapezförmig ausgebildet sein, was eine Zentrierung zusätzlich begünstigt.

Wenn der Zentriervorsprung insgesamt drei Schrägflächen aufweist, eignet sich dieser nicht nur zur Zentrierung eines Einsatzes sondern auch zur mittigen Abstützung und Zentrierung einer Schaltwippe, beispielsweise mit Hilfe eines an dem Zentriervorsprung vorgesehenen Zentrierkeils.

Nach einem weiteren Aspekt betrifft die vorliegende Erfindung auch einen Einsatz mit vier Seitenwänden für einen Blendrahmen der vorstehend beschriebenen Art, wobei in der Mitte jeder Seitenwand eine Zentrieraussparung zur Aufnahme jeweils eines Zentriervorsprungs vorgesehen ist. Ein solcher Einsatz kann zum Einstecken eines Netzsteckers, eines Netzwerksteckers oder beliebiger anderer Stecker ausgebildet sein. Im Falle eines Steckdoseneinsatzes für einen Netzstecker weist der Steckdoseneinsatz üblicherweise einen angeformten Steckdosentopf zur Aufnahme des Netzsteckers auf. Auch kann der Einsatz als Sensor, Dimmer oder als ein anderes elektrisches oder mechanisches Gerät ausgebildet sein.

Nach einer vorteilhaften Ausführungsform kann jede Zentrieraussparung des Einsatzes zwei zueinander geneigte Schrägflächen aufweisen, die insbesondere mit einem trapezförmigen Zentriervorsprung des Blendrahmens zusammenwirken können.

Nach einer weiteren vorteilhaften Ausführungsform kann in der Mitte jeder Zentrieraussparung ein freigeschnittener Bereich zur Aufnahme eines Zentrierkeils vorgesehen sein. Hierdurch kann der Einsatz auf einen Blendrahmen aufgesetzt werden, der einen Zentrierkeil für eine Schaltwippe aufweist. Da dieser Zentrierkeil zur Zentrierung des Einsatzes nicht benötigt wird, jedoch von dem Zentriervorsprung des Blendrahmens vorsteht, wird durch die Zentrieraussparung ein Freiraum geschaffen, in dem der Zentrierkeil aufgenommen werden kann.

Nach einer weiteren vorteilhaften Ausführungsform kann die Zentrieraussparung an der Unterseite jeder Seitenwand vorgesehen sein, wodurch die Zentrieraussparung nach erfolgter Montage optisch nicht wahrnehmbar ist.

Nach einem weiteren Aspekt der vorliegenden Erfindung betrifft diese eine Schaltwippe für einen Blendrahmen der vorstehend beschriebenen Art, die zumindest drei Seitenwände aufweist, wobei in der Mitte zumindest einer Seitenwand ein Lagerzapfen vorgesehen ist. Mit einem solchen Lagerzapfen kann eine mittige Lagerung der Schaltwippe erreicht werden. Die Schaltwippe kann beispielsweise die quadratische Öffnung des Blendrahmens vollständig ausfüllen oder aber im Falle eines Doppelschalters rechteckig ausgebildet sein, so dass zwei gleichartige Schaltwippen innerhalb der Öffnung des Blendrahmens Platz finden. Im Falle einer quadratischen Schaltwippe ist in der Mitte zweier gegenüberliegender Seitenwände jeweils ein Lagerzapfen vorgesehen.

Nach einer weiteren vorteilhaften Ausführungsform kann der Lagerzapfen einen kegelförmig gekrümmten Mantelabschnitt aufweisen, wodurch die Schaltwippe beim Betätigen entlang dieses Mantelabschnitts abrollen kann und dabei gestützt und zentriert wird.

Nach einer weiteren vorteilhaften Ausführungsform kann an zwei gegenüberliegenden Seitenwänden der Schaltwippe ein Zentrierkeil vorgesehen sein, der insbesondere mit einem Zentrierkeil des Zentriervorsprungs des Blendrahmens zusammenwirken kann, so dass die Schaltwippe in ihrer Endstellung zentriert wird und für beide Schaltstellungen ein gleiches Spaltmaß eingehalten wird.

Der vorstehend beschriebene Blendrahmen kann auf äußerst vorteilhafte Weise sowohl in Kombination mit dem beschriebenen Einsatz wie auch in Kombination mit der beschriebenen Schaltwippe verwendet werden. Wenn der Einsatz in dem Blendrahmen eingesetzt ist, kann jeder Zentriervorsprung des Einsatzes in einer Zentrieraussparung des Blendrahmens aufgenommen sein. Wenn der Blendrahmen auf einem Schalter montiert wird, kann der Lagerzapfen der Schaltwippe auf einem Zentriervorsprung gelagert werden.

Nachfolgend wird die vorliegende Erfindung rein beispielhaft und anhand vorteilhafter Ausführungsformen und unter Bezugnahme auf die beigefügten Zeichnungen beschrieben. Es zeigen:
- Fig. 1: eine Draufsicht auf einen Blendrahmen;
- Fig. 2: einen Schnitt durch den Blendrahmen von Fig. 1 entlang der Linie II-II, wobei in einer Öffnung des Blendrahmens ein Steckdoseneinsatz eingesetzt ist;
- Fig. 3: eine vergrößerte Darstellung des Bereichs III von Fig. 2,
- Fig. 4: eine Schnittansicht von unten auf Blendrahmen und Steckdoseneinsatz von Fig. 2;
- Fig. 5: eine vergrößerte perspektivische Ansicht des Bereichs V von Fig. 1,
- Fig. 6: eine perspektivische Teilansicht von Blendrahmen und Schaltwippe;
- Fig. 7: eine vergrößerte Darstellung des Bereichs VII von Fig. 8; und
- Fig. 8: eine perspektivische Ansicht auf die Rückseite einer Schaltwippe.

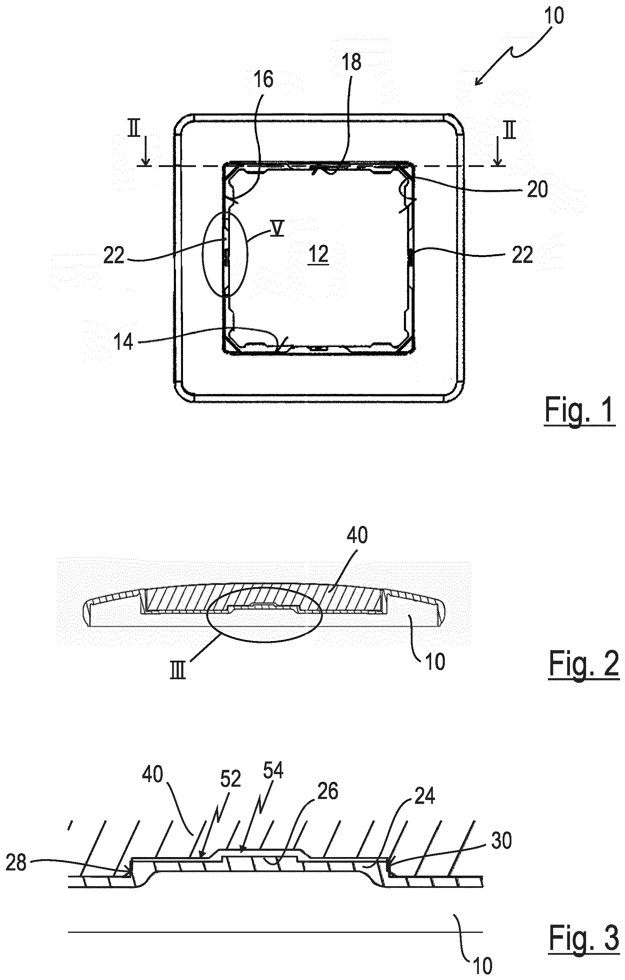

Fig. 1 zeigt einen Blendrahmen 10 für ein elektrisches Installationsgerät, beispielsweise eine Steckdose, einen Schalter, einen Dimmer, einen Sensor oder dergleichen. Der dargestellte Blendrahmen ist als Einfachrahmen gestaltet. Es versteht sich jedoch, dass dieser jedoch auch in gleicher Weise als Mehrfachrahmen ausgebildet sein kann.

Der dargestellte Blendrahmen 10 weist eine quadratische Öffnung 12 mit vier Seitenwänden 14 bis 20 auf, wobei sich jeweils die Seitenwände 16 und 20 sowie 14 und 18 gegenüberliegen. Die Öffnung 12 dient auf übliche Weise zur Aufnahme einer oder mehrere Schaltwippen oder eines Einsatzes für eine Steckdose, einen Sensor oder andere Geräte.

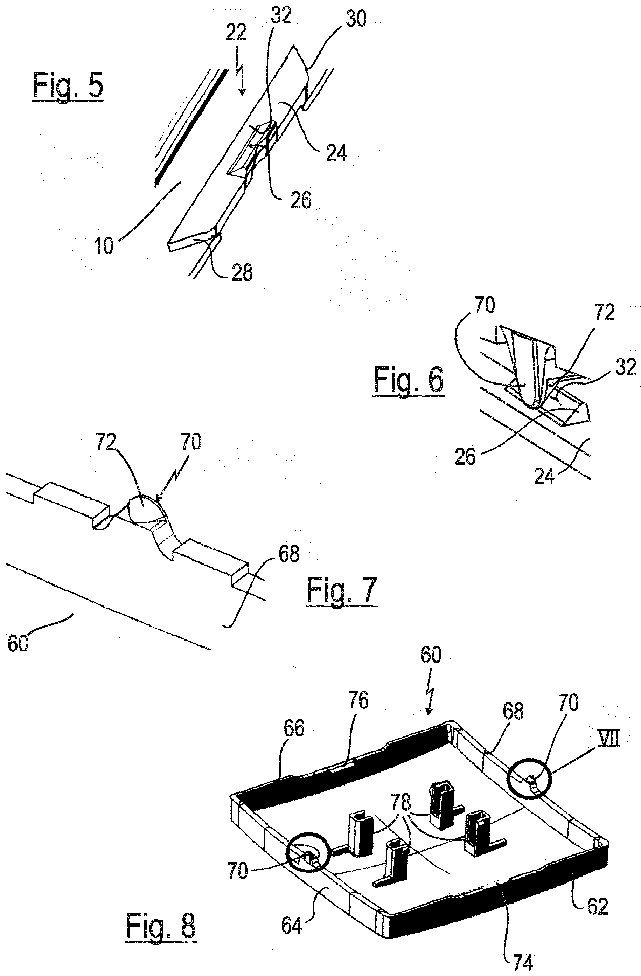

Wie Fig. 2 verdeutlicht, ist in der Öffnung und nur in der Mitte jeder Seitenwand 16 bis 20 jeweils ein Zentriervorsprung 22 vorgesehen, der in Fig. 5 vergrößert dargestellt ist.

Wie Fig. 5 zeigt, umfasst der Zentriervorsprung 22 einen trapezförmigen Sockel 24, auf den ein Zentrierkeil 26 aufgesetzt ist. Der Sockel 24 weist an seinen beiden Seiten abgeschrägte Schenkel 28 und 30 auf, wobei ein Lot auf jeden Schenkel eine benachbarte Seitenwand schneidet. Die beiden Schenkel 28 und 30 jedes Zentriervorsprungs 22 stellen zwei unterschiedlich orientierte Schrägflächen dar. Eine dritte Schrägfläche ist durch die Keilfläche 32 des Zentrierkeils 26 gebildet.

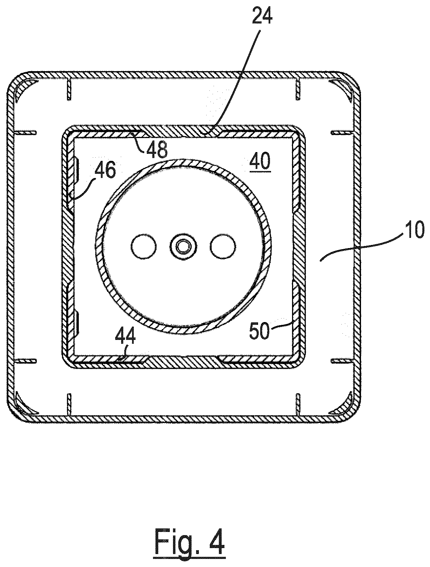

Fig. 2 zeigt den Blendrahmen 10 mit einem eingesetzten Einsatz. Bei dem dargestellten Ausführungsbeispiel handelt es sich um einen Steckdoseneinsatz 40, der vier Seitenwände 44, 46, 48 und 50 aufweist, wobei in der Mitte jeder Seitenwand eine Zentrieraussparung 52 (Fig. 3) zur Aufnahme jeweils eines Zentriervorsprungs 22 vorgesehen ist. Hierbei ist jede Zentrieraussparung 52 komplementär zu dem trapezförmigen Sockel 24 des Zentriervorsprungs 22 ausgebildet, so dass sich der Steckdoseneinsatz 40 bei Einsetzen in den Blendrahmen 10 selbsttätig zentriert (vgl. Fig. 4). Damit der Steckdoseneinsatz 40 plan in dem Blendrahmen aufliegt, ist in der Mitte jeder Zentrieraussparung 52 ein freigeschnittener Bereich 54 vorgesehen, der zur Aufnahme des Zentrierkeils 26 des Zentriervorsprungs 22 dient. Der Zentrierkeil 26 dient nicht zur Zentrierung des Steckdoseneinsatzes, sondern ist für die Lagerung und Zentrierung einer Schaltwippe vorgesehen, die nachfolgend beschrieben wird.

Fig. 8 zeigt eine perspektivische Ansicht der Rückseite einer Schaltwippe 60, die vier Seitenwände 62, 64, 66 und 68 aufweist, und die in die Öffnung 12 des Blendrahmens eingesetzt werden kann. Hierbei ist jeweils in der Mitte der Seitenwände 64 und 68 an die Unterseite der Seitenwand ein Lagerzapfen 70 angeformt, der in Fig. 7 vergrößert dargestellt ist und einen kegelförmig gekrümmten Mantelabschnitt 72 aufweist.

In der Mitte der beiden anderen Seitenwände 62 und 66 ist jeweils ein Zentrierkeil 74 und 76 vorgesehen.

Wenn der Blendrahmen 10 auf einem Schalter befestigt werden soll, kann die Schaltwippe 60 mit an der Rückseite angebrachten zapfenartigen Elementen 78 an dem Schalter befestigt werden, wobei die Lagerzapfen 70 dann auf der Keilfläche 32 des Zentrierkeils 26 des Zentriervorsprungs 22 zu liegen kommen (vgl. Fig. 6). Bei einer Schaltbewegung kann dann der kegelförmig gekrümmte Mantelabschnitt 72 der beiden Lagerzapfen 70 auf jeweils einer Keilfläche 32 abrollen. Hierbei wird die Schaltwippe gleichzeitig mittig abgestützt und gelagert und aufgrund der in Richtung der Außenseite des Blendrahmens orientierten Keilflächen 32 zentriert. In ihrer Endstellung liegt die Schaltwippe 60 mit einem Zentrierkeil 74 oder 76 an dem zugehörigen Zentrierkeil 26 eines Zentriervorsprungs an, so dass auch in der Endstellung der Schaltwippe eine Zentrierung erfolgt.

Vorstehend wurde eine Schaltwippe für einen Blendrahmen beschrieben, die als Einzelwippe ausgebildet ist. Es versteht sich jedoch, dass erfindungsgemäß auch eine Doppelwippe vorgesehen werden kann, bei der die Schaltwippe gewissermaßen geteilt ist, so dass eine einzelne (halbe) Schaltwippe rechteckig ausgebildet ist und sich über die Hälfte der Öffnung 12 erstreckt. In diesem Fall wäre lediglich in der Mitte einer Seitenwand ein Lagerzapfen vorgesehen. Ein Zentrierkeil würde sich jedoch an den beiden anderen Seitenwänden befinden, die sich gegenüberliegen. Die beiden (halben) Schaltwippen könnten miteinander verclipst und durch einen sich durch beide Wippen erstreckenden Stift mechanisch stabilisiert sein.

## Patentansprüche

1. Blendrahmen (10) für ein elektrisches Installationsgerät, mit zumindest einer quadratischen Öffnung (12) mit vier Seitenwänden (16 - 20), die zur Aufnahme einer Schaltwippe oder eines Einsatzes dient,
**dadurch gekennzeichnet,**
**dass** in der Öffnung (12) und nur in der Mitte jeder Seitenwand (16 - 20) ein Zentriervorsprung (22) vorgesehen ist.

2. Blendrahmen nach Anspruch 1,
**dadurch gekennzeichnet,**
**dass** der Zentriervorsprung (22) zumindest zwei unterschiedlich orientierte Schrägflächen aufweist.

3. Blendrahmen nach Anspruch 1 oder 2,
**dadurch gekennzeichnet,**
**dass** der Zentriervorsprung (22) eine Schrägfläche (23) aufweist, die eine Bewegung einer in der Öffnung (12) angeordneten Schaltwippe (60) in Richtung der Seitenwand bewirkt, an der sich der Zentriervorsprung (22) befindet.

4. Blendrahmen nach einem der vorstehenden Ansprüche,
**dadurch gekennzeichnet,**
**dass** der Zentriervorsprung (22) trapezförmig ausgebildet ist.

5. Blendrahmen nach einem der vorstehenden Ansprüche,
**dadurch gekennzeichnet,**
**dass** der Zentriervorsprung (22) insgesamt drei Schrägflächen (28, 30, 32) aufweist.

6. Blendrahmen nach einem der vorstehenden Ansprüche,
**dadurch gekennzeichnet,**
**dass** der Zentriervorsprung (22) einen Zentrierkeil (26) aufweist.

7. Einsatz (40) mit vier Seitenwänden (46 - 50), für einen Blendrahmen (10) nach einem der vorstehenden Ansprüche,
**dadurch gekennzeichnet,**
**dass** in der Mitte jeder Seitenwand (46 - 50) eine Zentrieraussparung (52) zur Aufnahme jeweils eines Zentriervorsprungs (22) vorgesehen ist.

8. Einsatz (40) nach Anspruch 7,
**dadurch gekennzeichnet,**
**dass** die Zentrieraussparung (52) zwei zueinander geneigte Schrägflächen aufweist.

9. Einsatz (40) nach Anspruch 7 oder 8,
**dadurch gekennzeichnet,**
**dass** in der Mitte der Zentrieraussparung (52) ein freigeschnittener Bereich (54) zur Aufnahme eines Zentrierkeils (26) vorgesehen ist.

10. Einsatz (40) nach Anspruch 7, 8 oder 9,
**dadurch gekennzeichnet,**
**dass** die Zentrieraussparung (52) an der Unterseite jeder Seitenwand (44 - 50) vorgesehen ist.

11. Schaltwippe (60) mit zumindest drei Seitenwänden (62 - 68), für einen Blendrahmen (10) nach einem der vorstehenden Ansprüche 1 - 6,
**dadurch gekennzeichnet,**
**dass** in der Mitte zumindest einer Seitenwand (64, 68) ein Lagerzapfen (70) vorgesehen ist.

12. Schaltwippe (60) nach Anspruch 11,
**dadurch gekennzeichnet,**
**dass** der Lagerzapfen (70) einen kegelförmig gekrümmten Mantelabschnitt (72) aufweist.

13. Schaltwippe (60) nach Anspruch 11 oder 12,
**dadurch gekennzeichnet,**
**dass** an zwei Seitenwänden (62, 66) ein Zentrierkeil (74, 76) vorgesehen ist.

14. Kombination eines Blendrahmens (10) nach einem der Ansprüche 1 - 6 mit einem Einsatz (40) nach einem der Ansprüche 7 bis 11 oder mit einer Schaltwippe (60) nach einem der Ansprüche 12 - 13.

15. Kombination nach Anspruch 14, wobei jeder Zentriervorsprung (22) in einer Zentrieraussparung (52) des Einsatzes (40) aufgenommen ist, oder der Lagerzapfen (70) der Schaltwippe (60) auf einem Zentriervorsprung (22) gelagert ist.

## Claims

1. A frame (10) for an electrical installation device, said frame comprising at least one square opening (12) which has four side walls (16 - 20) and which serves to receive a rocker or an insert,
**characterized in that**
a centering projection (22) is provided in the opening (12) and only in the middle of each side wall (16 - 20).

2. A frame according to claim 1,
**characterized in that**
the centering projection (22) has at least two differently oriented slanted surfaces.

3. A frame according to claim 1 or 2,
**characterized in that**
the centering projection (22) has a slanted surface (23) which effects a movement of a rocker (60), which is arranged in the opening (12), towards the side wall at which the centering projection (22) is located.

4. A frame according to any one of the preceding claims,
**characterized in that**
the centering projection (22) is trapezoidal.

5. A frame according to any one of the preceding claims,
**characterized in that**
the centering projection (22) has a total of three slanted surfaces (28, 30, 32).

6. A frame according to any one of the preceding claims,
**characterized in that**
the centering projection (22) has a centering wedge (26).

7. An insert (40), which has four side walls (46 - 50), for a frame (10) according to any one of the preceding claims,
**characterized in that**
a centering recess (52) for receiving a respective centering projection (22) is provided in the middle of each side wall (46 - 50).

8. An insert (40) according to claim 7,
**characterized in that**
the centering recess (52) has two slanted surfaces which are inclined with respect to one another.

9. An insert (40) according to claim 7 or 8,
**characterized in that**
a cut-free region (54) for receiving a centering wedge (26) is provided in the middle of the centering recess (52).

10. An insert (40) according to claim 7, 8 or 9,
**characterized in that**
the centering recess (52) is provided at the underside of each side wall (44 - 50).

11. A rocker (60), which has at least three side walls (62 - 68), for a frame (10) according to any one of the preceding claims 1 to 6,
**characterized in that**
a bearing pin (70) is provided in the middle of at least one side wall (64, 68).

12. A rocker (60) according to claim 11,
**characterized in that**
the bearing pin (70) has a conically curved jacket section (72).

13. A rocker (60) according to claim 11 or 12,
**characterized in that**
a centering wedge (74, 76) is provided at two side walls (62, 66).

14. A combination of a frame (10) according to any one of the claims 1 to 6 with an insert (40) according to any one of the claims 7 to 11 or with a rocker (60) according to one of the claims 12 to 13.

15. A combination according to claim 14, wherein each centering projection (22) is received in a centering recess (52) of the insert (40), or the bearing pin (70) of the rocker (60) is supported on a centering projection (22).

## Revendications

1. Cadre de recouvrement (10) pour un appareil d'installation électrique, comportant au moins une ouverture carrée (12) ayant quatre parois latérales (16 à 20) et servant à recevoir une bascule de commutation ou un insert, **caractérisé en ce qu'**une saillie de centrage (22) est prévue dans l'ouverture (12) et uniquement au centre de chaque paroi latérale (16 à 20).

2. Cadre de recouvrement selon la revendication 1,
**caractérisé en ce que** la saillie de centrage (22) présente au moins deux surfaces inclinées orientées différemment.

3. Cadre de recouvrement selon la revendication 1 ou 2,
**caractérisé en ce que** la saillie de centrage (22) présente une surface inclinée (23) qui provoque un mouvement d'une bascule de commutation (60), disposée dans l'ouverture (12), en direction de la paroi latérale sur laquelle se trouve la saillie de centrage (22).

4. Cadre de recouvrement selon l'une des revendications précédentes,
**caractérisé en ce que** la saillie de centrage (22) est de forme trapézoïdale.

5. Cadre de recouvrement selon l'une des revendications précédentes,
**caractérisé en ce que** la saillie de centrage (22) présente au total trois surfaces inclinées (28, 30, 32).

6. Cadre de recouvrement selon l'une des revendications précédentes,
**caractérisé en ce que** la saillie de centrage (22) présente une cale de centrage (26).

7. Insert (40) ayant quatre parois latérales (46 à 50), pour un cadre de recouvrement (10) selon l'une des revendications précédentes,
**caractérisé en ce qu'**un évidement de centrage (52) est prévu au centre de chaque paroi latérale (46 à 50) pour recevoir une saillie de centrage (22) respective.

8. Insert (40) selon la revendication 7,
**caractérisé en ce que** l'évidement de centrage (52) présente deux surfaces inclinées s'étendant en oblique l'une par rapport à l'autre.

9. Insert (40) selon la revendication 7 ou 8,
**caractérisé en ce qu'**une zone découpée (54) est prévue au centre de l'évidement de centrage (52) pour recevoir une cale de centrage (26).

10. Insert (40) selon la revendication 7, 8 ou 9,
**caractérisé en ce que** l'évidement de centrage (52) est prévu sur la face inférieure de chaque paroi latérale (44 à 50).

11. Bascule de commutation (60) ayant au moins trois parois latérales (62 à 68), pour un cadre de recouvrement (10) selon l'une des revendications précédentes 1 à 6,
**caractérisée en ce qu'**un tourillon (70) est prévu au centre d'au moins une paroi latérale (64, 68).

12. Bascule de commutation (60) selon la revendication 11,
**caractérisée en ce que** le tourillon (70) présente une partie enveloppe (72) courbée en forme de cône.

13. Bascule de commutation (60) selon la revendication 11 ou 12,
**caractérisée en ce qu'**une cale de centrage (74, 76) est prévue sur deux parois latérales (62, 66).

14. Combinaison d'un cadre de recouvrement (10) selon l'une des revendications 1 à 6 avec un insert (40) selon l'une des revendications 7 à 11 ou avec une bascule de commutation (60) selon l'une des revendications 12 à 13.

15. Combinaison selon la revendication 14,
dans laquelle chaque saillie de centrage (22) est reçue dans un évidement de centrage (52) de l'insert (40), ou le tourillon (70) de la bascule de commutation (60) est monté sur une saillie de centrage (22).
